# EUROPEAN PATENT APPLICATION

(11) **EP 2 634 093 A1**
(43) Date of publication of application: **04.09.2013**
(21) Application number: 11805550.8
(22) Date of filing: 24.10.2011
(51) Int. Cl.: B64D 37/08, B64C 3/26, B64C 3/34, B64C 3/18, B64C 1/06

(54) **FILLER PANELS FOR AIRCRAFT FUEL TANK COVERINGS**

(30) Priority: 27.10.2010 ES 201031577 P
(71) Applicant: Airbus Operations, S.L., 28906 Getafe Madrid (ES)
(72) Inventor: GARCÍA VÁZQUEZ, Luis Miguel, E-28049 Madrid (ES); RECIO MELERO, Manuel, E-28030 Getafe Madrid (ES); LATORRE PLAZA, Teresa, E-28045 Madrid (ES)
(74) Representative: Elzaburu Marquez, Alberto
(86) International application number: PCT/ES2011/070736
(87) International publication number: WO 2012/056076

(57) **Abstract**

An aircraft lifting surface structured as a torsion box comprising upper and lower skins (19, 21) stiffened by span wise stringers (25, 25', 25"), said aircraft lifting surface comprising one or more fuel tanks (31, 33, 35, 37) arranged inside of said torsion box and separated by bulkheads (41), the stringers (25, 25', 25") having extended feet in the intersection areas with said bulkheads (41), also comprising filler panels (45) of said skins (19, 21) covering the holes that remain between said skins (19, 21) and said bulkheads (41) outside said intersection areas, whose configuration is adapted for covering the space between the extended feet (26, 26') of stringers (25, 25'), leaving a gap with them of a predetermined width (W1), thereby providing a self-fastening capability over each skin plane that facilitates the attachment of said filler panels (45) to said skins (19, 21).

## Description

### FIELD OF THE INVENTION

This invention refers to the skins of aircraft fuel tanks and, more in particular, to filler panels attached to them on the intersection areas with the fuel tank bulkheads, between contiguous stringers.

### BACKGROUND OF THE INVENTION

The main structure for aircraft lifting surfaces mainly consists of a leading edge, a torsion box, a trailing edge, a root joint and a wing tip. The torsion box in turn consists of several structural elements: upper and lower skins stiffened by stringers on one side; spars and ribs on the other side. Typically, the structural elements forming the torsion box are manufactured separately and are joined with the aid of complicated tooling to achieve the necessary tolerances, which are given by the aerodynamic, assembly and structural requirements.

Nowadays, and particularly in the aeronautical industry, composite materials with an organic matrix and continuous fibres, especially CFRP (Carbon Fibre Reinforced Plastic) are widely used in a great variety of structural elements. For example, all the elements which make up the torsion box enumerated beforehand (ribs, stringers, spars and skins) can be manufactured using CFRP.

The skins which make up the torsion boxes are stiffened with span wise longitudinal stringers that improve both the strength and the buckling behaviour of the skins having different cross sections such as "T", "I" or "J" shaped cross sections. Full height of stringer benefits the stability of the panel by means of a bigger inertia in the stiffening element.

Aircraft fuel tanks are usually housed in the torsion box of the aircraft wing. They are usually delimited by bulkheads following rib and stringer traces.

The design and manufacture of said torsion boxes involves several problems. One of them is the sealing of the holes that remain between the skins and the bulkheads close to the intersection areas between bulkheads and stringers.

One known solution for said problem is attaching to the skins filler panels covering said holes by means of rivets. An important drawback of this solution is that requires a riveting operation during the assembly of the torsion box of the wing that involves time and costs.

This invention is focused on the solution of this problem.

### SUMMARY OF THE INVENTION

One object of the present invention is to provide an aircraft lifting surface comprising one or more fuel tanks delimited by watertight bulkheads easy to assemble.

Another object of the present invention is to provide an aircraft lifting surface comprising one or more fuel tanks delimited by watertight bulkheads with a limited number of riveted unions.

These and another objects are met by an aircraft lifting surface, such as a wing, structured as a torsion box comprising upper and lower skins stiffened by span wise stringers, span wise front and rear spars and chord wise ribs, said aircraft lifting surface comprising one or more fuel tanks arranged inside of said torsion box and separated by bulkheads, the stringers having extended feet in the intersection areas with said bulkheads, also comprising filler panels of said skins covering the holes that remain between said skins and said bulkheads outside said intersection areas whose configuration is adapted for covering the space between the extended feet of contiguous stringers, leaving a gap with them of a predetermined width W1, thereby providing a self-fastening capability over each skin plane that facilitates the attachment of said filler panels to said skins.

In embodiments of the present invention wherein said predetermined width W1 between a filler panel and the borders of the extended feet of contiguous stringers is comprised between 2-4 mm. Hereby it is achieved an aircraft lifting surface with a minimum gap between the extended feet of contiguous stringers and said filler panels for allowing its attachment to the skin without compromising said self-fastening capability.

In embodiments of the present invention said skins and said stringers are made of Carbon Fibre Reinforced Plastic (CFRP), said bulkheads are made of aluminum and said filler panels are made of Glass Fibre Reinforced Plastic (GFRP). Hereby it is achieved an aircraft lifting surface having self-fastening low-weight filler panels for covering the holes between the skins and the bulkheads.

In embodiments of the present invention said stringers are T-shaped stringers, said extended feet have an arched shape with a symmetry axis on the trace of each intersected bulkhead and said filler panels have a "dog bone" shape adapted to said arched shape. Hereby it is achieved an aircraft lifting surface having filler panels suitable shaped for being incorporated to skins stiffened with T-shaped stringers.

In embodiments of the present invention each border of said extended feet comprise a central straight segment and two curved segments and each border of said filler panels comprise a central straight segment, two curved intermediate segments and two end straight segments of a predetermined length W2 (preferably comprised between 10-14 mm), displaced at a predetermined perpendicular distance W3 (preferably comprised between 20-30 mm) from said central straight segment. Hereby it is achieved an aircraft lifting surface having filler panels of an optimized configuration for being incorporated to skins stiffened with T-shaped stringers.

Other characteristics and advantages of the present invention will be clear from the following detailed description of embodiments illustrative of its object in relation to the attached figures.

### BRIEF DESCRIPTION OF DRAWINGS

Figure 1 a is a perspective view of a known multi-rib torsion box of an aircraft wing and Figure 1b is a cross-section view of Figure 1a along plane A-A.
Figure 2 is a plan view of a left part of an aircraft wing showing the position of a centre fuel tank, an outboard fuel tank, a surge tank and a small tank.
Figure 3 is a plan view of a wing skin in an intersection area between one fuel tank bulkhead and two contiguous stringers incorporating a filler panel according to the present invention.
Figure 4 is an enlarged view of said filler panel.
Figure 5 is a transversal section of said intersection area in the lower wing skin.
Figure 6 is an enlarged view of the filler panel according to the present invention attached to the lower wing skin.

### DETAILED DESCRIPTION OF THE INVENTION

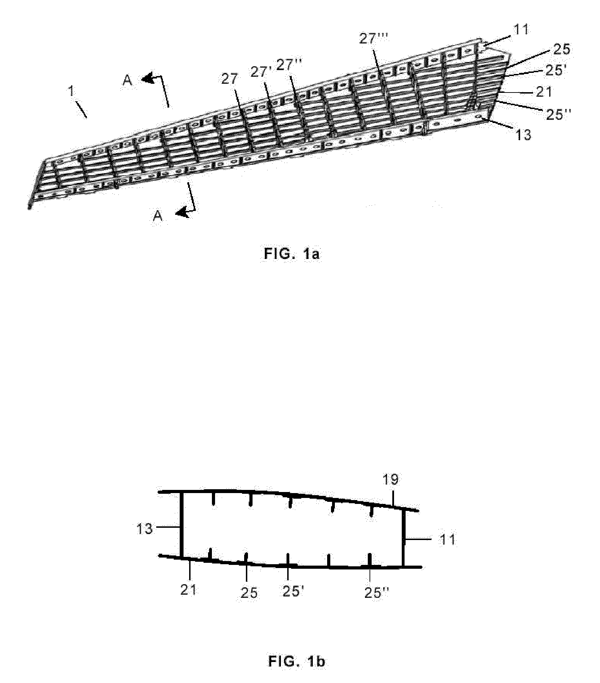

The invention relates to fuel tanks housed in a multi-rib torsion box structure with longitudinal stiffeners having preferably a T-shaped cross-section. A multi-rib torsion box 1 such as the one depicted in Figures 1a and 1b is structurally based on a span wise front spar 11 and a span wise rear spar 13 (understanding the terms front and rear in relation to the flight direction of the aircraft), a plurality of chord wise ribs 27, 27', 27", 27''' and the upper and lower skins 19, 21 with a plurality of span wise stringers 25, 25', 25".

The main functions of ribs 27, 27', 27", 27"' is to provide torsion rigidity and to limit the skins 19, 21 and the stringers 25, 25', 25" longitudinally so as to discretize the buckling loads and maintain the shape of the aerodynamic surface.

The primary function of the skins 19, 21 is to provide a continuous surface to give support and distribute the aerodynamic loads and, thus, it is structured as a set of panels delimited by said ribs 27, 27', 27", 27"' and said stringers 25, 25', 25" as well as the front spar 11 and the rear spar 13.

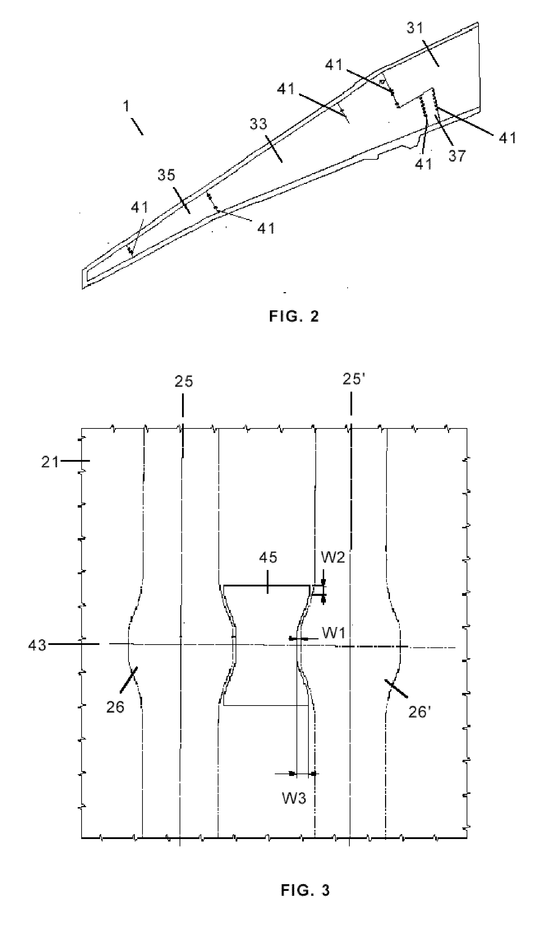

Figure 2 shows the left part of the torsion box of an aircraft wing housing a centre tank 31, an outboard tank 33 a surge tank 35 and also an small tank 37 where is located the fuel pump. Said tanks are separated by bulkheads 41 following rib or stringer traces. The bulkheads 41 and the ribs 27, 27', 27", 27''' have a similar structure but the bulkheads 41 shall be watertight, as they are the tank walls.

Figure 3 shows an intersection area of, for instance, the lower skin 21 with one of said bulkheads 41 represented by its trace 43 between two contiguous stringers 25, 25'.

In said intersection area, the stringers 25, 25' have extended feet 26, 26' in a similar way to the intersections between stringers and ribs for providing space for the stringer-rib-skin unions. As represented in Figure 3 said extended feet 26, 26' have typical arched borders.

According to an embodiment of this invention in said intersection area a filler panel 45, dimensioned for covering the space between said extended feet 26, 26', leaving a gap W1 between their borders, is attached to the skin 21. Said filler panel 45 has a "dog bone" shape determined by the arched borders of the extended feet 26, 26' that provides a self-fastening capability over the skin plane, i.e. the filler panel 45 is embraced by the contiguous extended feet 26, 26' preventing its displacement over the skin surface.

In a preferred embodiment, the arched borders of the extended feet 26, 26' comprise a central straight segment 27 and two curved segments 28, 29 and the opposed borders of the filler panels 45 comprise a central straight segment 47, two curved intermediate segments 48, 49 and two end straight segments 50, 51 of a length W2, displaced at a perpendicular distance W3 from said central straight segment 47.

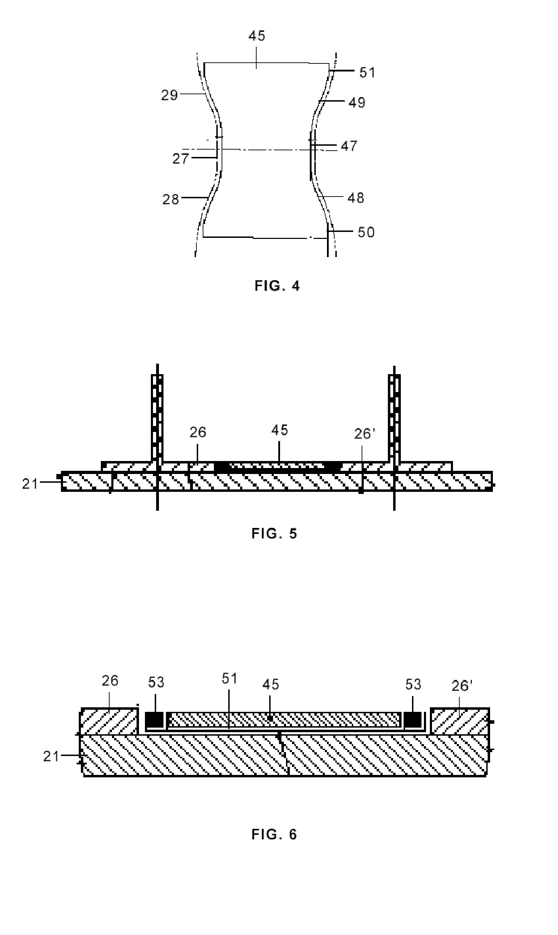

Figure 5 shows an intersection area with a filler panel 45 in the lower skin 21 and Figure 6 shows how said filler panel 45 is attached to the lower skin 21 using a first sealing means 51 and how the gaps with the borders of the extended feet 26, 26' are sealed with a second sealing means 53 of a lesser density than said first sealing means 51.

In preferred embodiments of the invention:
- The stringers 25, 25', 25" and the skins 19, 21 are made of Carbon Fibre Reinforced Plastic (CFRP).
- The bulkheads 41 are made of aluminum.
- The filler panels 45 are made of Glass Fibre Reinforced Plastic (GFRP).
- W1 is comprised between 2-4 mm.
- W2 is comprised between 10-14 mm.
- W3 is comprised between 20-30 mm.

Although the present invention has been fully described in connection with preferred embodiments, it is evident that modifications may be introduced within the scope thereof, not considering this as limited by these embodiments, but by the contents of the following claims.

## Claims

1. An aircraft lifting surface structured as a torsion box comprising upper and lower skins (19, 21) stiffened by span wise stringers (25, 25', 25"), span wise front and rear spars (11, 13) and chord wise ribs (27, 27', 27"), said aircraft lifting surface comprising one or more fuel tanks (31, 33, 35, 37) arranged inside of said torsion box and separated by bulkheads (41), the stringers (25, 25', 25") having extended feet in the intersection areas with said bulkheads (41), also comprising filler panels (45) of said skins (19, 21) covering the holes that remain between said skins (19, 21) and said bulkheads (41) outside said intersection areas, **characterized in that** the configuration of said filler panels (45) is adapted for covering the space between the extended feet (26, 26') of contiguous stringers (25, 25'), leaving a gap with them of a predetermined width (W1), thereby providing a self-fastening capability over each skin plane that facilitates the attachment of said filler panels (45) to said skins (19, 21).

2. An aircraft lifting surface according to claim 1, wherein said predetermined width (W1) between a filler panel (45) and the borders of the extended feet (26, 26') of contiguous stringers (25, 25') is comprised between 2-4 mm.

3. An aircraft lifting surface according to any of claims 1-2, wherein said skins (19, 21) and said stringers (25, 25', 25") are made of CFRP, said bulkheads (41) are made of aluminum and said filler panels (45) are made of GFRP.

4. An aircraft lifting surface according to any of claims 1-3, wherein said stringers (25, 25', 25") are T-shaped stringers, said extended feet have an arched shape with a symmetry axis on the trace of each intersected bulkhead (41) and said filler panels (45) have a "dog bone" shape adapted to said arched shape.

5. An aircraft lifting surface according to claim 4, wherein:
- each border of said extended feet comprise a central straight segment (27) and two curved segments (28, 29);
- each border of said filler panels (45) comprise a central straight segment (47), two curved intermediate segments (48, 49) and two end straight segments (50, 51) of a predetermined length (W2), displaced at a predetermined perpendicular distance (W3) from said central straight segment (47).

6. An aircraft lifting surface according to claim 5, wherein:
- said predetermined length (W2) is comprised between 10-14 mm;
- said predetermined perpendicular distance (W3) is comprised between 20-30 mm.

7. An aircraft lifting surface according to any of claims 1-6, wherein the lifting surface is a wing.
